(19) Europäisches Patentamt
European Patent Office
Office européen des brevets

(11) EP 0 787 430 A1

(12) **EUROPÄISCHE PATENTANMELDUNG**

(43) Veröffentlichungstag:
**06.08.1997 Patentblatt 1997/32**

(21) Anmeldenummer: **96120635.6**

(22) Anmeldetag: **20.12.1996**

(51) Int. Cl.$^6$: **A01N 43/80**
// (A01N43/80, 61:00, 57:20, 37:44)

(84) Benannte Vertragsstaaten:
**AT BE CH DE DK ES FR GB IT LI NL SE**
Benannte Erstreckungsstaaten:

(30) Priorität: **23.12.1995 DE 19548710**

(71) Anmelder: **RIEDEL-DE HAEN AKTIENGESELLSCHAFT**
**D-30926 Seelze (DE)**

(72) Erfinder: **LINDNER, Wolfgang, Dr.**
**30926 Seelze (DE)**

(74) Vertreter: **Geissler, Bernhard, Dr. jur., Dipl.-Phys. et al**
**Patent- und Rechtsanwälte**
**Bardehle . Pagenberg . Dost . Altenburg . Frohwitter . Geissler & Partner**
**Postfach 86 06 20**
**81633 München (DE)**

(54) **Konservierungsmittel, enthaltend Isothiazolinon-Derivate und Komplexbildner**

(57) Die vorliegende Erfindung betrifft Konservierungsmittel, die Isothiazolinon-Derivate der allgemeinen Formel I,

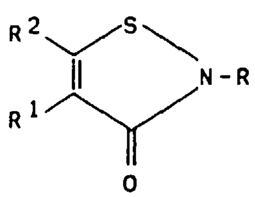

( I )

in der R, $R^1$ und $R^2$ die in Anspruch 1 angegebenen Bedeutungen haben, und Komplexbildner wie zum Beispiel Aminopolycarbonsäuren oder Polyphosphonsäuren enthalten, ihre Herstellung und ihre Verwendung, insbesondere zum Schutz von technischen Produkten gegen den Bewuchs durch Mikroorganismen, sowie ein Verfahren zur Steigerung der mikrobioziden Wirkung von Isothiazolinonen.

EP 0 787 430 A1

Printed by Rank Xerox (UK) Business Services
2.14.11/3.4

## Beschreibung

Die vorliegende Erfindung betrifft Konservierungsmittel, die Isothiazolinon-Derivate der allgemeinen Formel I

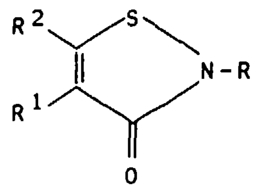

(I)

und Komplexbildner wie zum Beispiel Aminopolycarboxylate oder Polyphosphonate enthalten, ihre Herstellung und ihre Verwendung, insbesondere zum Schutz von wasserhaltigen technischen Produkten gegen den Bewuchs durch Mikroorganismen, sowie die Verwendung von Komplexbildnern zur Steigerung der Aktivität von Isothiazolinon-haltigen Konservierungsmitteln.

Wasserhaltige technische Materialien wie z. B. Dispersionen, Dispersionsfarben, Klebstoffe, Gelatine, Leime auf nativer Basis, Tensidlösungen, funktionelle Flüssigkeiten wie z. B. Bohrlochspülungen, Metallbearbeitungsflüssigkeiten und viele andere mehr werden schnell von Mikroorganismen wie Bakterien, Schimmelpilzen oder Hefen besiedelt und durch deren Stoffwechselaktivitäten geschädigt. Man setzt daher diesen Materialien zur Werterhaltung mikrobiozid wirkende Substanzen zu. Aufgrund des Bestrebens, die Emission organischer Lösemittel aus technischen Produkten zu verringern, werden darin zunehmend organische Lösemittel durch Wasser substituiert. Dadurch steigt aber bei diesen wäßrigen Systemen die Anfälligkeit gegen den Befall durch Mikroorganismen. An die zugesetzten Konservierungsmittel werden daher steigende Anforderungen an die Effektivität gestellt.

Zur Konservierung von wäßrigen technischen Produkten werden vielfach Isothiazolinon-Derivate verwendet. Diese Wirkstoffklasse vereinigt hohe mikrobiologische Aktivität mit leichter Abbaubarkeit in der Umwelt. Besonders Gemische aus 5-Chlor-2-methylisothiazolin-3-on mit 2-Methylisothiazolin-3-on sowie das Benzisothiazolin-3-on und das 4,5-Trimethylen-2-methylisothiazolin-3-on haben sich aufgrund ihrer Effektivität am Markt durchgesetzt. Allerdings weist die Wirkstoffklasse der mikrobiozid aktiven Isothiazolinon-Derivate den Nachteil auf, nur relativ langsam gegen Bakterien zu wirken. So muß man z. B. beim Einsatz einer handelsüblichen Formulierung einer Mischung aus 5-Chlor-2-methylisothiazolin-3-on und 2-Methylisothiazolin-3-on im Verhältnis 3:1 mit Einwirkzeiten von ca. 7 Tagen rechnen, um vorhandenen Bakterienbefall abzutöten. Bei der bekannten chemischen Empfindlichkeit dieser Wirkstoffklasse gegen Stoffwechselprodukte von Bakterien (Amine, Mercaptoverbindungen) kann es in dieser Zeit zu einer Zersetzung und damit Desaktivierung der Isothiazolinon-Derivate kommen. In diesem Fall versagt das Konservierungsmittel und die Keimzahl der überlebenden Bakterien wird wieder ansteigen.

Bei der Konservierung mit Isothiazolinon-Derivaten ist man wegen des hautsensibilisierenden Potentials dieser Substanzen an einer möglichst niedrigen Einsatzkonzentration interessiert, wobei mit einer Verringerung der Einsatzkonzentration wegen des relativ hohen Preises der Isothiazolinone zudem auch noch erhebliche wirtschaftliche Vorteile verbunden sind. Daher sind verschiedene Kombinationsprodukte mit weiteren Wirkstoffen wie z. B. Aldehyden oder Formaldehyddepotverbindungen entwickelt worden. Diese Produkte können aber aufgrund der Eigenschaften, wie z.B. Reaktivität mit Systembestandteilen, Flüchtigkeit, Toxizität, nicht umfassend eingesetzt werden. Formaldehyd steht zudem im Verdacht der krebserzeugenden Wirkung. Bekannte Kombinationsprodukte mit quaternären Ammoniumsalzen sind häufig nicht mit Farben, Kunststoffdispersionen, Leimen usw. verträglich und führen zu Koagulationen.

Aus dem Bereich der Kosmetik und der Desinfektion ist es bekannt, einige Wirkstoffe wie z. B. Phenolderivate in Kombination mit Ethylendiamintetraessigsäure oder anderen Komplexbildnern zu verwenden (siehe A. D. Russel, W. B. Hugo und G. A. J. Ayliffe, Principles and Practice of Desinfection, Preservation and Sterilisation, Blackwell Scientific Publications (1982), S. 66 ff.). Eine Steigerung dieser Aktivität der Wirkstoffe in den Desinfektionsmitteln wird aber im allgemeinen nur gegenüber bestimmten Bakterienarten beobachtet.

In der EP-A-436 744 ist die Stabilisierung von Isothiazolinon-Derivaten in Konservierungsmitteln mit Peroxiden beschrieben. Zur Stabilisierung der zugesetzten Peroxide wird dort in bekannter Weise - zur Desaktivierung von Schwermetallspuren - Diethylentriaminpentaessigsäure zugesetzt. Auf eine direkte, aktivierende Wirkung der zugesetzten Diethylentriaminpentaessigsäure auf die Isothiazolinon-Derivate finden sich dort aber keinerlei Hinweise.

Aufgabe der vorliegenden Erfindung ist es, Konservierungsmittel mit einer hohen Aktivität gegenüber einem breiten Spektrum von Mikroorganismen, aber ohne die erwähnten Nachteile in ökologischer und toxikologischer Hinsicht oder hinsichtlich der Verträglichkeit mit den zu konservierenden Systemen bereitzustellen, mit denen sich in günstiger Weise der steigende Bedarf nach unbedenklichen, effektiven Konservierungsmitteln insbesondere für wasserhaltige technische Produkte und Systeme befriedigen läßt.

Überraschend wurde gefunden, daß diese Aufgabe durch die Kombination von Isothiazolinon-Mikrobioziden mit

Komplexbildnern (Chelatoren) gelöst wird. Ein Zusatz von Komplexbildnern verursacht eine erhebliche synergistische Steigerung der mikrobiologischen Wirksamkeit von Isothiazolinon-Derivaten und führt z. B. zu einer starken Erhöhung der Abtötungsrate von Bakterien. Solche Kombinationen lassen sich vorteilhaft als Konservierungsmittel in technischen Produkten einsetzen.

Gegenstand der vorliegenden Erfindung sind somit Konservierungsmittel, enthaltend ein oder mehrere Isothiazolinone der allgemeinen Formel I

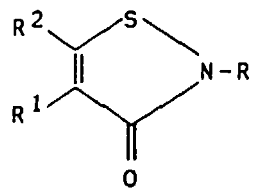

(I)

und/oder Salze davon, wobei

R für Wasserstoff, $(C_1-C_8)$-Alkyl, $(C_3-C_{12})$-Cycloalkyl, $(C_2-C_{18})$-Alkenyl oder $(C_6-C_{10})$-Aryl steht und
$R^1$ und $R^2$ unabhängig voneinander für Wasserstoff, Fluor, Chlor, Brom, $(C_1-C_4)$-Alkyl oder $(C_2-C_4)$-Alkenyl stehen oder $R^1$ und $R^2$ zusammen mit den diese Reste tragenden Kohlenstoffatomen einen carbocyclischen Ring bilden, der bis zu drei Kohlenstoff-Kohlenstoff-Doppelbindungen enthalten kann;
dadurch gekennzeichnet, daß sie ein oder mehrere Komplexbildner und/oder Salze davon enthalten, wobei Konservierungsmittel ausgeschlossen sind, die in wäßriger Lösung als Komplexbildner Diethylentriaminpentaessigsäure in einer Menge von bis zu 0.1 Gewichtsprozent, bezogen auf die gesamte Lösung, und gleichzeitig als zusätzlichen Inhaltsstoff ein Peroxid enthalten.

Für R, $R^1$ und $R^2$ stehende Alkyl- und Alkenylreste können geradkettig oder verzweigt sein. Beispiele für Alkylreste sind Methyl, Ethyl, n-Propyl, i-Propyl, n-Butyl, i-Butyl, sec-Butyl, tert-Butyl, Pentyl, Hexyl, 2-Ethylbutyl, Heptyl, Octyl, n-Octyl und 2-Ethylhexyl. Beispiele für Alkenylreste sind Vinyl, Allyl, 2-Butenyl, 3-Butenyl, 3-Methyl-2-butenyl, Hexenyl, Heptenyl und Octenyl.

Beispiele für Cycloalkylreste sind Cyclopropyl, Cyclobutyl, Cyclopentyl, Cyclohexyl, Cycloheptyl, Cyclooctyl, Cyclodecyl und Cyclododecyl, die auch durch einen oder mehrere Alkylreste substituiert sein können. Beispiele für Arylreste sind der 1-Naphthyl- und der 2-Naphthylrest und insbesondere der Phenylrest, die auch einfach oder mehrfach durch Halogen, besonders Fluor, Chlor, Brom, und/oder durch Alkyl substituiert sein können. Besonders bevorzugte Phenylreste, die durch Halogen substituiert sind, sind der 4-Fluorphenyl- und 2-Fluorphenylrest.

Bilden $R^1$ und $R^2$ zusammen mit den sie tragenden Kohlenstoffatomen des Isothiazolringes einen carbocyclischen Ring, d. h. sind also $R^1$ und $R^2$ gewissermaßen durch eine Bindung verknüpft, so handelt es sich bei den Verbindungen der allgemeinen Formel I um kondensierte Heterocyclen. Die Zahl der Ringglieder des carbocyclischen Ringes kann zwischen 3 und 10 liegen, bei dem kondensierten Heterocyclus kann es sich also beispielsweise um ein Derivat des Cyclopropa-, des Cyclobuta-, des Cyclopenta-, des Cyclohexa-, des Cyclohepta-, des Cycloocta- oder des Cylcododecaisothiazols handeln. Bevorzugt ist es, wenn $R^1$ und $R^2$ zusammen mit den sie tragenden Kohlenstoffatomen einen 3- bis 6-gliedrigen Ring bilden, besonders bevorzugt sind Derivate des Cyclopenta- und des Cyclohexaisothiazols. Wird die in der allgemeinen Formel I enthaltene, den beiden Ringen gemeinsame Doppelbindung mitgezählt, so kann der carbocyclische Ring insgesamt ein, zwei oder drei Kohlenstoff-Kohlenstoff-Doppelbindungen enthalten. Ist beispielsweise der carbocyclische Ring ein Sechsring mit drei konjugierten Doppelbindungen, so liegt ein benzanelliertes Isothiazolderivat vor, ein 1,2-Benzisothiazolin-3-on. Ein anellierter Benzolring läßt sich formal auch als dadurch entstanden ansehen, daß $R^1$ und $R^2$ für Vinylreste stehen, deren endständige Kohlenstoffatome durch eine Einfachbindung verknüpft sind. Nach einer anderen Bezeichnungsweise handelt es sich bei Verbindungen der allgemeinen Formel I, in der $R^1$ und $R^2$ zusammen mit den sie tragenden Kohlenstoffatomen einen carbocyclischen Ring bilden bzw. in der für $R^1$ und $R^2$ stehende Reste durch eine Bindung verknüpft sind, um Derivate von 4,5-Polymethylenisothiazolin-3-onen, beispielsweise um Derivate des 4,5-Trimethylen- oder des 4,5-Tetramethylenisothiazolin-3-ons. Der carbocyclische Ring in Verbindungen der allgemeinen Formel I, den $R^1$ und $R^2$ zusammen mit den sie tragenden Kohlenstoffatomen bilden können, kann auch eine oder mehrere Alkyl- und/oder Alkenylgruppen tragen.

Die Verbindungen der allgemeinen Formel I können in den erfindungsgemäßen Konservierungsmitteln einzeln oder als Gemisch von zwei oder mehr dieser Verbindungen mit beliebigen Mengenverhältnissen vorliegen.

Die Isothiazolinone der allgemeinen Formel I können in den erfindungsgemäßen Konservierungsmitteln ganz oder teilweise in Form von Salzen oder auch Salzgemischen vorliegen, bevorzugt in Form von löslichen Salzen, insbesondere in Form von wasserlöslichen Salzen. Verbindungen der allgemeinen Formel I, in denen R für Wasserstoff steht,

können Metallsalze bilden; Beispiele für Kationen, die in solchen Salzen und damit in den erfindungsgemäßen Konservierungsmitteln allein oder im Gemisch enthalten sein können, sind Alkalimetallionen, z. B. Lithium-, Natrium- und Kaliumionen, Erdalkalimetallionen, z. B. Magnesium-, Calcium- und Bariumionen, Aluminiumionen, Zinnionen, Übergangsmetallionen, z. B. Eisen-, Mangan-, Cobalt-, Nickel- und Zinkionen.

Die Isothiazolin-3-on-Derivate können ebenso in Form ihrer Metallsalzkomplexe vorliegen, beispielsweise als Barium-, Calcium-, Kobalt-, Kupfer-, Nickel-, Mangan-, Silber- oder Zinksalze z. B. der Anionen Chlorid, Bromid, Bromat, Nitrat oder Sulfat.

Mit Säuren können die Verbindungen der allgemeinen Formel I Säureadditionssalze bilden. Beispiele für Anionen, die in solchen Salzen und damit in dem erfindungsgemäßen Konservierungsmittel allein oder im Gemisch enthalten sein können, sind Chlorid, Perchlorat, Bromid, Iodid, Nitrat, Sulfat, Acetat, Citrat, Ascorbat, Maleat, Oxalat, Methylsulfonat, Carbonat oder Phosphat, wobei von mehrwertigen Säuren abgeleitete Anionen auch in nur teilweise neutralisierter Form vorliegen können, beispielsweise etwa als Hydrogenphosphat oder Hydrogencarbonat.

Ob es zweckmäßig ist, die Verbindungen der allgemeinen Formel I in den erfindungsgemäßen Konservierungsmitteln ganz oder teilweise in Form eines oder mehrerer Salze einzusetzen, richtet sich nach dem gewünschten Eigenschaftsprofil der Konservierungsmittel und ihrer vorgesehenen Verwendung und hängt zum Beispiel auch vom pH-Wert der zu konservierenden Materialien ab.

Bevorzugt steht R für Wasserstoff oder ($C_1$-$C_8$)-Alkyl, insbesondere die n-Alkylreste oder in der 2-Position verzweigte Alkylreste. Besonders bevorzugt steht R für Wasserstoff, Methyl, n-Octyl oder 2-Ethylhexyl. Bevorzugt stehen $R^1$ und $R^2$ unabhängig voneinander für Chlor oder Wasserstoff oder bilden zusammen eine Trimethylen- oder Tetramethylenkette; bevorzugt ist es weiterhin auch, wenn $R^1$ und $R^2$ zusammen mit den sie tragenden Kohlenstoffatomen einen anellierten Benzolring bilden, wenn also das 1,2-Benzisothiazolin-3-on oder ein Derivat davon vorliegt.

Besonders bevorzugt ist der Einsatz folgender Isothiazolin-3-one in den erfindungsgemäßen Konservierungsmitteln: 4,5-Dichlor-2-methylisothiazolin-3-on, 4,5-Dichlor-2-n-octylisothiazolin-3-on, 5-Chlor-2-methylisothiazolin-3-on, 2-Methylisothiazolin-3-on, 2-n-Octylisothiazolin-3-on, 4,5-Trimethylen-2-methylisothiazolin-3-on (TITZ), 1,2-Benzisothiazolin-3-on (BIT) oder Mischungen aus diesen.

Liegen Isothiazolin-3-one ganz oder teilweise in Form von Salzen vor, so sind als Kationen in Metallsalzen Lithium-, Natrium-, Kalium-, Magnesium- und Calciumionen bevorzugt; als Anionen in Säureadditionssalzen sind Chlorid, Nitrat und Bromat bevorzugt.

Als Komplexbildner können in den erfindungsgemäßen Konservierungsmitteln entsprechend der üblichen engeren Definition des Begriffes Substanzen eingesetzt werden, die mit Metallionen unter Bildung von Ringverbindungen Komplexe bilden können. Zur Erläuterung wird z. B. auf Kirk-Othmer, Encyclopedia of Chemical Technology, John Wiley & Sons, Third Edition, Volume 5, S. 339 - 368, oder Ullmanns Encyklopädie der technischen Chemie, Verlag Chemie, 4. Auflage, Band 14, S. 714 verwiesen, die insofern vollinhaltlich Bestandteile der vorliegenden Offenbarung sind. Die Komplexbildner, auch Chelatbildner oder Chelatoren genannt, weisen zwei oder mehr Donoratome im Molekül auf, die mit Metallionen in Wechselwirkung treten können. Zahlreiche solche Komplexbildner werden technisch hergestellt und vielfältig eingesetzt und sind allgemein zugänglich.

Bevorzugt enthalten die erfindungsgemäßen Konservierungsmittel als Komplexbildner eine oder mehrere Substanzen aus der Reihe der Aminopolycarbonsäuren und/oder aus der Reihe der Polyphosphonsäuren. Weitere bevorzugte Komplexbildner sind z. B. Phosphonopolycarbonsäuren, wie etwa die 2-Phosphonobutan-1,2,4-tricarbonsäure.

Unter Aminopolycarbonsäuren sind organische Verbindungen zu verstehen, die eine oder mehrere Aminogruppierungen und zwei oder mehr Carbonsäuregruppierungen im Molekül enthalten. Daneben können noch weitere funktionelle Gruppen enthalten sein. In Betracht kommen bevorzugt Abkömmlinge des Ammoniaks, von Monoaminen, von Diaminen wie z. B. Ethylen- oder Propylendiamin, von Triaminen wie z. B. Diethylentriamin, oder von Polyaminen, in denen Stickstoffatome der Aminogruppierungen über Alkylengruppen, insbesondere Methylengruppen, mit Carbonsäuregruppierungen verknüpft sind. Als Vertreter von Verbindungen, in denen Essigsäureeinheiten an Aminostickstoffatome gebunden sind, seien beispielhaft als wohlbekannte Substanzen die Nitrilotriessigsäure ($N(CH_2CO_2H)_3$; NTA), die Ethylendiamintetraessigsäure (EDTA), die Hydroxyethylethylendiamintriessigsäure oder die Diethylentriaminpentaessigsäure (DTPA) genannt.

Unter Polyphosphonsäuren sind organische Verbindungen zu verstehen, die zwei oder mehr Phosphonsäuregruppierungen im Molekül enthalten. Daneben können noch weitere funktionelle Gruppen enthalten sein. In Betracht kommen sowohl Verbindungen, die keine Aminogruppierung im Molekül enthalten, als auch Aminopolyphosphonsäuren. Unter den aminogruppenfreien Verbindungen sind solche bevorzugt, die eine geminale Diphosphonsäuregruppierung enthalten, z. B. Alkan-1,1-diphosphonsäuren, insbesondere 1-Hydroxyalkan-1,1-diphosphonsäuren wie etwa die 1-Hydroxyethan-1,1-diphosphonsäure (HEDP). Als Beispiele für Aminopolyphosphonsäuren seien die 1-Aminoalkan-1,1-diphosphonsäuren, etwa die 1-Aminoethan-1,1-diphosphonsäure, genannt und insbesondere Abkömmlinge des Ammoniaks, von Monoaminen, von Diaminen wie z. B. Ethylen- oder Propylendiamin, von Triaminen wie z. B. Diethylentriamin, oder von Polyaminen, in denen Stickstoffatome der Aminogruppierungen über Alkylengruppen, insbesondere Methylengruppen, mit Phosphonsäuregruppierungen verknüpft sind. Als Vertreter der Phosphonsäureanaloga der oben erwähnten Verbindungen, in denen Essigsäureeinheiten an Aminostickstoffatome gebunden sind, also als Vertreter der Aminopoly(methylenphosphonsäuren), seien beispielhaft als wohlbekannte Substanzen die Nitrilotris(methylenphosphonsäure) ($N(CH_2PO_3H_2)_3$; auch bekannt unter der Bezeichnung Aminotris(methylenphosphonsäure)), die Ethylendiamintetrakis(methylenphosphonsäure) oder die Diethylentriaminpentakis(methylenphosphonsäure) genannt.

Besonders bevorzugt enthalten die erfindungsgemäßen Konservierungsmittel Komplexbildner, die kommerziell erhältlich sind, insbesondere die in technischem Maßstab hergestellten Komplexbildner, die zur Wasserenthärtung oder zur Maskierung von Metallionen Verwendung finden. Dies gilt auch für den Fall der bevorzugten Komplexbildner aus den Reihen der Aminopolycarbonsäuren und Polyphosphonsäuren.

Komplexbildner wie Aminopolycarbonsäuren, Polyphosphonsäuren oder Phosphonopolycarbonsäuren können sowohl in Form der freien Verbindungen als auch teilweise oder ganz in Form von Salzen in den erfindungsgemäßen Konservierungsmitteln enthalten sein, wobei die obigen Ausführungen zu den Salzen der Isothiazolinone hier entsprechend gelten. Carbonsäure- und Phosphonsäuregruppen können also beispielsweise in Form der Alkalimetall- oder Erdalkalimetallsalze vorliegen. Zur Herstellung der erfindungsgemäßen Konservierungsmittel können sowohl die freien Verbindungen als auch z. B. die Alkali- und/oder Erdalkalimetallsalze der Carbonsäuren bzw. Phosphonsäuren eingesetzt werden, wobei die Säuregruppen vollständig oder nur teilweise in die Salzform überführt sein können. Als Alkali- bzw. Erdalkalimetallsalze kommen z. B. Lithium-, Natrium-, Kalium-, Magnesium- und Calciumsalze in Betracht.

Die Verbindungen der allgemeinen Formel I sind überwiegend bekannt und teilweise kommerziell erhältlich. Sie können nach oder analog zu literaturbekannten Verfahren hergestellt werden, z. B. nach dem Verfahren der US-A-3 523 121, bei dem sie in Form der Hydrochloride anfallen, aus denen die freien Isothiazolin-3-one durch Neutralisation erhalten werden. 2-n-Octylisothiazolin-3-on und 1,2-Benzisothiazolin-3-on sind kommerziell erhältlich. 5-Chlor-2-methylisothiazolin-3-on ist im Gemisch mit 2-Methylisothiazolin-3-on als konzentrierte Lösung erhältlich, ebenso ist das 4,5-Trimethylen-2-methylisothiazolin-3-on, das z. B. nach dem in der EP-A-419 075 beschriebenen Verfahren zugänglich ist, als konzentrierte Lösung kommerziell erhältlich. Bei den bevorzugten, kommerziell erhältliche Isothiazolin-3-one der allgemeinen Formel I enthaltenden erfindungsgemäßen Konservierungsmittel ist es besonders bevorzugt, die Isothiazolinone bei der Herstellung der Konservierungsmittel in einer handelsüblichen Form, z. B. in Form einer Lösung, einzusetzen. Sollen z. B. aus handelsüblichen festen Säureadditionssalzen von Isothiazolin-3-onen, z. B. aus ihren Hydrochloriden, flüssige Formulierungen hergestellt werden, in den die Isothiazolin-3-one nicht in Form der Säureadditionssalze vorliegen, können die Säureadditionssalze beispielsweise in einem Lösungs- oder Dispersionsmittel, bevorzugt z. B. in Wasser, gelöst oder dispergiert werden und mit der gewünschten Menge an Basen, z. B. mit Metallhydroxiden wie etwa Natriumhydroxid oder mit Aminen oder mit basischen Ionenaustauschern, umgesetzt werden, beispielsweise neutralisiert werden.

Auch die in den erfindungsgemäßen Konservierungsmitteln enthaltenen Komplexbildner können nach oder analog zu literaturbekannten, dem Fachmann geläufigen, Verfahren hergestellt werden und sind vielfach kommerziell erhältlich. Insbesondere die bevorzugt enthaltenen Komplexbildner aus der Reihe der Aminopolycarbonsäuren und der Polyphosphonsäuren, beispielsweise Ethylendiamintetraessigsäure, Diethylentriaminpentaessigsäure, Nitrilotriessigsäure, 1-Hydroxyethan-1,1-diphosphonsäure, Aminotris(methylenphosphonsäure) oder Ethylendiamintetrakis(methylenphosphonsäure) und analoge Verbindungen, sind wohlbekannt und werden in großem Umfang technisch hergestellt. Beim Einsatz der in den erfindungsgemäßen Konservierungsmitteln bevorzugt enthaltenen kommerziell erhältlichen Komplexbildner ist es wiederum besonders bevorzugt, diese bei der Herstellung der Konservierungsmittel in einer handelsüblichen Form einzusetzen, je nach Einzelfall z. B. in Form der freien Säuren oder in Form der Salze oder z. B. in Form einer Lösung oder in Substanz.

Die erfindungsgemäßen Konservierungsmittel sind bevorzugt flüssig und für eine einfache Anwendung zweckmäßigerweise homogen.

Besonders bevorzugt sind flüssige Formulierungen, in denen die Komponenten des Konservierungsmittels in gelöster oder weitgehend gelöster Form vorliegen, ganz besonders bevorzugt wäßrige flüssige Formulierungen, darüber hinaus bevorzugt wäßrige Lösungen. Als Lösungsmittel können Wasser und organische Lösungsmittel, bevorzugt wasserlösliche, besonders bevorzugt wassermischbare organische Lösungsmittel, Verwendung finden, wobei das Lösungsmittel aus nur einer Komponente bestehen kann oder es sich um ein Gemisch mit zwei oder mehr Komponenten handeln kann, z. B. um ein Gemisch aus zwei oder mehr organischen Lösungsmitteln oder ein Gemisch aus Wasser und einem oder mehreren organischen Lösungsmitteln. Wäßrige Formulierungen können nur Wasser als Lösungsmittel enthalten oder neben Wasser auch noch ein oder mehrere organische Lösungsmittel.

Geeignete organische Lösungsmittel sind z. B. Alkohole wie Methanol, Ethanol, n-Propanol, i-Propanol, Ethylenglykol, Propylenglykol, Di- und Polyethylenglykole, Di- und Polypropylenglykole, Polyethylenglykol-polypropylen-glykolkondensate, 1,4-Butandiol; Ketone wie Aceton, Methylethylketon; Ether wie Mono- und Dimethyl- und -ethylether und Monobutylether der genannten Glykole, Diglykole und Polyglykole; Ester wie Mono- und Diacetate der genannten Glykole und Acetate der genannten Glykolmonoether. Bevorzugte organische Lösungsmittel sind Alkohole, wobei Glykole, Diglykole und Polyglykole, insbesondere solche, die aus Ethylenoxid und/oder Propylenoxid erhältlich sind, besonders bevorzugt sind.

Die Auswahl des oder der Lösungsmittel für ein bestimmtes erfindungsgemäßes flüssiges Konservierungsmittel richtet sich nach den Eigenschaften, z. B. den Löslichkeiten, der eingesetzten Verbindungen der allgemeinen Formel I,

der Komplexbildner und eventueller weiterer Komponenten, und nach den angestrebten Eigenschaften und dem Verwendungszweck des Konservierungsmittels.

Zur Herstellung der erfindungsgemäßen Konservierungsmittel werden die Inhaltsstoffe, also die Verbindungen der allgemeinen Formel I, die Komplexbildner und gegebenenfalls weitere Substanzen, vorzugsweise in Form von Handelsprodukten, und im Falle von flüssigen Konservierungsmitteln das oder die Lösungsmittel oder das Lösungsmittelgemisch, vermischt. Das Vermischen kann z. B. unter Rühren erfolgen. Soll ein Konservierungsmittel hergestellt werden, das die Komponenten in gelöster Form enthält, und werden eine oder mehrere Komponenten in fester Form eingesetzt, so wird der Mischvorgang solange durchgeführt, bis die Auflösung des Feststoffs erfolgt ist. Dabei kann es zweckmäßig sein, zur Beschleunigung der Auflösung das Vermischen bei erhöhten Temperaturen von z. B. bis 80° C durchzuführen. Beim Vermischen können alle Komponenten und alle Lösungsmittel in dem Gewichtsverhältnis zusammengegeben werden, in dem sie in dem fertigen Konservierungsmittel vorliegen sollen, oder es können auch zunächst nur eine oder einige der Komponenten und eines oder einige der Lösungsmittel oder nur ein Teil des oder der Lösungsmittel zusammengegeben und vermischt werden und dann die zur Einstellung der Endzusammensetzung des Konservierungsmittels noch fehlenden Komponenten oder Mengen zugesetzt werden. Auch ein bestimmter gewünschter pH-Wert kann nach Zusammengeben von einer oder einigen Komponenten und einem oder einigen Lösungsmitteln und/oder nach Zusammengeben aller Komponenten und Lösungsmittel eingestellt werden. pH-Einstellungen werden bevorzugt mit handelsüblichen Formen von Säuren oder Basen, z. B. wäßrigen Lösungen von Salzsäure, Salpetersäure bzw. Natronlauge oder Lithiumhydroxid vorgenommen. Welche pH-Bereiche in den erfindungsgemäßen Konservierungsmitteln günstigerweise eingestellt werden, hängt vom Einzelfall ab und richtet sich z. B. nach dem eingesetzten Isothiazolinon. Im Falle des 1,2-Benzisothiazolin-3-ons (BIT) haben die erfindungsgemäßen Konservierungsmittel beispielsweise bevorzugt einen pH-Wert im Bereich 8 bis 13, im Falle von 2-Alkyl- oder 2-Arylisothiazolinonen bevorzugt einen pH-Wert im Bereich von 2 bis 8.

In den erfindungsgemäßen Konservierungsmitteln liegen die einzelnen Isothiazolinone der allgemeinen Formel I bevorzugt in einer (End-)Konzentration von 0.1 Gewichtsprozent bis 50 Gewichtsprozent, bezogen auf die Gesamtmenge des Konservierungsmittels, vor, besonders bevorzugt in einer Konzentration von 1 Gew.-% bis 20 Gew.-%, ganz besonders bevorzugt in einer Konzentration von 1.4 Gew.-% bis 10 Gew.-%. In den bevorzugten flüssigen Konservierungsmitteln, in denen die Komponenten in gelöster Form vorliegen, wird die Obergrenze der Konzentration eines Isothiazolinon-Derivats durch dessen Löslichkeit bestimmt. Auch die Gesamtkonzentration der in den erfindungsgemäßen Konservierungsmitteln enthaltenen Isothiazolin-Derivate, also die Summe der Konzentrationen aller Verbindungen der allgemeinen Formel I in den erfindungsgemäßen Konservierungsmitteln, beträgt bevorzugt 0.1 Gewichtsprozent bis 50 Gewichtsprozent, bezogen auf die Gesamtmenge des Konservierungsmittels, besonders bevorzugt 1 Gew.-% bis 20 Gew.-%, ganz besonders bevorzugt 1.4 Gew.-% bis 10 Gew.-%. Sind in dem Konservierungsmittel mehrere Verbindungen der allgemeinen Formel I enthalten, so können die relativen Anteile der einzelnen Verbindungen in breiten Grenzen variieren und hängen z. B. von den Eigenschaften der einzelnen Verbindungen, z. B. ihrer Wirkstärke gegen bestimmte Mikroorganismen, und der vorgesehenen Verwendung ab.

Die einzelnen Komplexbildner liegen in den erfindungsgemäßen Konservierungsmitteln bevorzugt in einer (End-) Konzentration von 0.1 Gewichtsprozent bis 20 Gewichtsprozent, bezogen auf die Gesamtmenge des Konservierungsmittels, vor, besonders bevorzugt in einer Konzentration von 0.1 Gew.-% bis 10 Gew.-%, ganz besonders bevorzugt in einer Konzentration von 1 Gew.-% bis 10 Gew.-%, darüber hinaus bevorzugt in einer Konzentration von 2 Gew.-% bis 5 Gew.-%. In den bevorzugten flüssigen Konservierungsmitteln, in denen die Komponenten in gelöster Form vorliegen, wird die Obergrenze der Konzentration eines Komplexbildners durch seine Löslichkeit oder die seiner Salze bestimmt. Auch die Gesamtkonzentration der in den erfindungsgemäßen Konservierungsmitteln enthaltenen Komplexbildner, also die Summe der Konzentrationen aller Komplexbildner in den erfindungsgemäßen Konservierungsmitteln, beträgt bevorzugt 0.1 Gewichtsprozent bis 20 Gewichtsprozent, bezogen auf die Gesamtmenge des Konservierungsmittels, besonders bevorzugt 0.1 Gew.-% bis 10 Gew.-%, ganz besonders bevorzugt 1 Gew.-% bis 10 Gew.-%, darüber hinaus bevorzugt 2 Gew.-% bis 5 Gew.-%. Sind in dem Konservierungsmittel mehrere Komplexbildner enthalten, so können die relativen Anteile der einzelnen Verbindungen wiederum in breiten Grenzen variieren und hängen vom Einzelfall ab.

Auch das Gewichtsverhältnis der in den erfindungsgemäßen Konservierungsmitteln enthaltenen Gesamtmenge an Isothiazolinon-Derivaten der allgemeinen Formel I zur Gesamtmenge an Komplexbildnern kann in einem weiten Bereich variieren. Das im Einzelfall günstigste Verhältnis hängt z. B. von der Aktivität des Wirkstoffes gegen die Zielorganismen ab und ist somit je nach dem oder den enthaltenen Isothiazolinon-Derivaten und dem oder den Komplexbildnern unterschiedlich. Üblicherweise liegt das Verhältnis der Gesamtmengen Isothiazolinon-Derivate : Komplexbildner im Bereich 0.01 : 1 bis 10 : 1, es können aber auch größere oder kleinere Verhältnisse im Einzelfall angebracht sein.

Neben den Isothiazolinon-Derivaten der allgemeinen Formel I und den Komplexbildnern können in den erfindungsgemäßen Konservierungsmitteln weitere Substanzen, sowohl Wirkstoffe als auch Hilfsstoffe, enthalten sein. Die im Einzelfall zweckmäßige Zusammensetzung der Konservierungsmittel richtet sich nach den Eigenschaften der Komponenten und der vorgesehenen Verwendung. So kann es z. B. günstig sein, die mikrobiozide Wirkung durch Zusätze von weiteren verträglichen Wirkstoffen zu steigern. In den erfindungsgemäßen Konservierungsmitteln können die Isothiazolinone beispielsweise mit Wirkstoffen wie Bronopol, Chloracetamid, Aldehyden, Aldehydumsetzungsprodukten oder Carbendazim kombiniert werden.

Als Hilfsstoffe können in den erfindungsgemäßen Konservierungsmitteln beispielsweise Stabilisatoren für die Isothiazolinon-Derivate enthalten sein, z. B. Nitrate wie Natriumnitrat, Kaliumnitrat oder Magnesiumnitrat, Bromate wie Natriumbromat, Kaliumbromat oder Magnesiumbromat, oder z. B. organische Bromverbindungen wie 2,2-Dibrom-2-cyanacetamid oder 5-Brom-5-nitro-1,3-dioxan. Andere in Betracht kommende Hilfsstoffe sind z. B. anorganische und/oder organische Säuren, Basen und Puffersubstanzen zur pH-Einstellung, Farbstoffe, Tenside, Dispergiermittel, Viskositätsregler oder Korrosionsinhibitoren.

Die erfindungsgemäßen Konservierungsmittel dienen zur Verhinderung des Wachstums von Mikroorganismen bzw. zur Bekämpfung von Mikroorganismen in technischen Produkten und Systemen. Sie können in allen technischen Produkten und Systemen eingesetzt werden, in denen Mikroorganismen wachsen können, insbesondere in wäßrigen oder Wasser enthaltenden Produkten und Systemen und besonders vorteilhaft in solchen mit einem hohen Wasseranteil. Beispielhaft genannt sei die Verwendung in Kunststoffdispersionen und Polymerdispersionen und daraus hergestellten Produkten und Zubereitungen, Farben, Dispersionsfarben, Putzen, Farbstoffpräparationen, Tinten, Pigmentslurries, Lasuren, Textilhilfsmitteln, Reinigern, Tensidlösungen, Kautschuklatices, Wachsemulsionen, Verdikkerlösungen, nativen Produkten, Gelatine, Leimen, Hautleimen, Klebstoffen, Treibstoffen, Kraftstoffen, funktionellen Flüssigkeiten wie Bohrlochspülungen, Metallbearbeitungsflüssigkeiten, Papierbehandlungsmitteln, Kühlflüssigkeiten wie z. B. Kühlwasser, in Kühlsystemen und Kühlkreisläufen, bei der Papierherstellung, in Chemietoiletten usw. Besonders vorteilhaft lassen sich die erfindungsgemäßen Konservierungsmittel in Polymerdispersionen und Dispersionsfarben einsetzen.

Der Zusatz der erfindungsgemäßen Konservierungsmittel zu den Produkten, die vor Bewuchs durch Mikroorganismen zu schützen sind, kann direkt nach der Herstellung dieser Produkte erfolgen. Ebenso kann der Zusatz aber auch bereits während des Herstellungsprozesses dieser Produkte erfolgen oder zu einem späteren Zeitpunkt als unmittelbar nach der Herstellung der Produkte, beispielsweise in Zusammenhang mit einem späteren Abfüllvorgang. Das Konservierungsmittel kann den zu schützenden Produkten oder Systemen auch gleichzeitig oder im auch im Gemisch mit anderen, ohnehin zuzusetzenden Substanzen zugesetzt werden. Durch geeignete Maßnahmen, beispielsweise Rühren, ist eine gleichmäßige Verteilung des Konservierungsmittels in den technischen Produkten oder Systemen zu gewährleisten. Die zuzusetzende Menge bzw. die einzustellende Konzentration des Konservierungsmittels in den zu schützenden Produkten und Systemen hängt vom Einzelfall ab und richtet sich unter anderem nach dem Produkt, dem Ausmaß der Befallsgefahr durch Mikroorganismen oder der Art und der Konzentration der Komponenten des zugesetzten Konservierungsmittels. Im allgemeinen werden Konzentrationen an Konservierungsmittelformulierung (mit den oben angegebenen Konzentrationen der Wirkstoffe) in den zu schützenden Produkten von 0.001 Gewichtsprozent bis 1 Gewichtsprozent, bevorzugt von 0.05 Gewichtsprozent bis 0.4 Gewichtsprozent, bezogen auf die Gesamtmasse des zu konservierenden Gutes, eingestellt, doch können im Einzelfall auch höhere oder niedrigere Konzentrationen zweckmäßig sein. Gegenstand der vorliegenden Erfindung ist damit auch ein Verfahren zur Konservierung von technischen Produkten und technischen Systemen, dadurch gekennzeichnet, daß den Produkten und Systemen ein erfindungsgemäßes Konservierungsmittel zugesetzt wird.

Die erfindungsgemäßen Konservierungsmittel, die Isothiazolinone der allgemeinen Formel I in Kombination mit Komplexbildnern enthalten, sind überraschenderweise gegen Mikroorganismen wesentlich besser wirksam als aufgrund der Summe der Aktivitäten der Einzelkomponenten zu erwarten war. Dabei ist diese Summe der Aktivitäten der Einzelkomponenten vielfach im wesentlichen gleich der Aktivität der eingesetzten Isothiazolinone allein, da die Komplexbildner allein im allgemeinen keine nennenswerten Aktivitäten gegenüber Mikroorganismen aufweisen. Der Zusatz von Komplexbildnern zu Isothiazolinonen der allgemeinen Formel I führt also überraschenderweise zu einer synergistisch gesteigerten mikrobioziden Wirksamkeit. Gegenstand der vorliegenden Erfindung ist daher auch ein Verfahren zur Steigerung der mikrobioziden Wirkung von Isothiazolinonen der allgemeinen Formel I, dadurch gekennzeichnet, daß die Isothiazolinone in Kombination mit einem oder mehreren Komplexbildnern eingesetzt werden, und die Verwendung von Komplexbildnern zur Steigerung der mikrobioziden Wirkung von Isothiazolinonen, wobei die obigen Erläuterungen zu den Isothiazolinonen und Komplexbildnern hier ebenso gelten. Eine quantitative Angabe der synergistischen Wirkungssteigerung kann z. B. nach der Methode von Kull, Applied Microbiology, Volume 9, S. 538 - 541 (1961) erfolgen, die weiter unten erläutert ist.

Mikroorganismen, die sich vorteilhaft mit den erfindungsgemäßen Konservierungsmitteln bekämpfen lassen, sind beispielsweise Bakterien wie z. B. Enterobacter aerogenes, Escherichia coli, Proteus vulgaris, Pseudomonas aeruginosa, Bacillus subtilis, Pseudomonas fluorescens, Cyanobakterien wie z. B. Nostoc commune, Pilze wie z. B. Aspergillus niger, Mucor spec., Penicillium funicolosum, Chaetomium globosum, Ulocladium consortiale, Hefen wie z. B. Candida albicans, Saccharomyces cerevisiae oder Algen wie z. B. Chlorella fusca und Anabaena cyclindrica.

Die erfindungsgemäßen Konservierungsmittel zeichnen sich weiterhin durch einen wesentlich beschleunigten Wirkungseintritt, also eine wesentlich verbesserte Wirkungsgeschwindigkeit, aus, sie sind stabil gegenüber einer Zersetzung der Isothiazolinone und sie sind sehr gut verträglich mit einem breitem Spektrum zu konservierender technischer Produkte.

## Beispiele

In den folgenden, die Erfindung erläuternden Beispielen handelt es sich bei der Angabe von Prozenten um Gewichtsprozente. Es werden folgende Abkürzungen verwandt:

TITZ = 4,5-Trimethylen-2-methylisothiazolin-3-on
BIT = 1,2-Benzisothiazolin-3-on
EDTA = Ethylendiamintetraessigsäure
NTA = Nitrilotriessigsäure
HEDP = 1-Hydroxyethan-1,1-diphosphonsäure
DTPA = Diethylentriaminpentaessigsäure

### Beispiel 1

Stabilität

Bei Raumtemperatur werden eine wäßrige Lösung von TITZ (Konzentration der eingesetzten kommerziell erhältlichen Lösung in Wasser: 15 %) und eine Lösung des Natriumsalzes des jeweiligen, in Tabelle 1 angegebenen Komplexbildners in entionisiertem Wasser verrührt, so daß die Endkonzentration sowohl an TITZ als auch an dem Komplexbildner in der Mischung jeweils 5 % beträgt. Der pH-Wert der Mischung wird mit Salzsäure auf 4 - 5 eingestellt. Die Lösungen werden bei erhöhter Temperatur (40 °C) in verschlossenen Glasgefäßen gelagert. Die Analyse erfolgt nach den in Tabelle 1 angegebenen Zeiten mittels Hochdruckflüssigkeitschromatographie (UV-Detektion). Tabelle 1 enthält die nach den angegebenen Zeiten wiedergefundenen Anteile des ursprünglich vorhandenen TITZ.

Tabelle 1

| Nr. | Komplexbildner | Wiederfindung nach 14 Tagen | Wiederfindung nach 28 Tagen |
|---|---|---|---|
| 1 | EDTA | 96 % | 96 % |
| 2 | NTA | 100 % | 100 % |
| 3 | HEDP | 98 % | 96 % |
| 4 | DTPA | 97 % | 95 % |

### Beispiel 2

Wirksamkeitssteigerung von TITZ gegen Bakterien in Nährlösung

Aus 1.0 g Standard-I-Nährbouillon (Fa. Merck) und 1 l destilliertem Wasser wird eine Nährlösung hergestellt. Es werden Stammlösungen der Konservierungsmittelformulierungen in der Bakteriennährlösung hergestellt, indem 1010 mg der jeweiligen Formulierung in 100 ml der Nährlösung gelöst werden. Folgende Formulierungen werden eingesetzt (wäßrige Lösungen; Komplexbildner als Natrium- bzw. Dinatriumsalze):

Nr. 1: Formulierung mit 1.13 % TITZ und 7.5 % EDTA
Nr. 2: Formulierung mit 1.13 % TITZ und 15 % EDTA
Nr. 3: Formulierung mit 1.13 % TITZ und 7.5 % NTA
Nr. 4: Formulierung mit 1.13 % TITZ und 15 % NTA

Die Konzentration an der Konservierungsmittelformulierung in der Stammlösung beträgt 10100 mg/l. In eine 24-Zellen-Mikrotiterplatte (Nunclon®, Fa. Nunc) wird jeweils 1 ml Nährlösung in die Zellenreihen 1 bis 6 einpipettiert. Zur ersten Zelle einer Reihe wird jeweils 1 ml der Konservierungsmittelstammlösung pipettiert. Die in der ersten Zelle vorliegende höchste Prüfkonzentration der Konservierungsmittelformulierung beträgt damit 5050 mg/l Nährlösung. Die Verdünnungsreihen werden jeweils durch Überpipettieren von jeweils 1 ml der Lösung in die darauffolgende Zelle hergestellt. Zur Kontrolle werden jeweils 1 bis 2 Zellen einer Mikrotiterplatte mit Nährlösung ohne Konservierungsmittel versetzt. Man beimpft jede Zelle mit 100 Mikroliter einer Suspension von Bakterien, die man aus einer befallenen Nährlösung isoliert hat. Nach der Beimpfung wird 7 Tage bei 25 °C bebrütet. Nach 7 Tagen sind die wirkstofffreien Kontrollösungen durch Bakterienwachstum trüb. Man bonitiert die Trübung durch Bakterienwachstum in jeder Zelle. Als MHK-Wert (minimale Hemmkonzentration) gilt die niedrigste Konzentration der Wirkstoffe, bei der die Nährlösung nicht mit Bakterien bewachsen ist. Entsprechend werden die MHK-Werte der Einzelkomponenten (TITZ, EDTA, NTA) ermittelt.

Die synergistische Wirksamkeitssteigerung berechnet sich nach dem Verfahren von Kull (Applied Microbiology, Vol. 9, S. 538 - 541 (1961)) zu

$$\text{Synergismus} = Q_A/Q_a + Q_B/Q_b\ .$$

Darin bedeuten $Q_A$ den MHK-Wert des Isothiazolinons als Konzentration in der Nährlösung beim Einsatz der erfindungsgemäßen Kombination, $Q_a$ den MHK-Wert des Isothiazolinons als Einzelkomponente, $Q_B$ den MHK-Wert des Komplexbildners als Konzentration in der Nährlösung beim Einsatz der erfindungsgemäßen Kombination und $Q_b$ den MHK-Wert des Komplexbildners als Einzelkomponente. Die Komplexbildner haben bis zu der höchsten Prüfkonzentration von 3200 mg/l keine mikrobiozide Wirkung in dem Test, die Berechnungen werden daher mit einem $Q_b$-Wert von 3200 mg/l durchgeführt. Eine synergistische Wirkungsverstärkung liegt vor, wenn der nach der obigen Formel berechnete Wert des Synergismus kleiner als 1 ist.

In der folgenden Tabelle 2 sind für Kombinationen aus TITZ als Isothiazolinon und den angegebenen Komplexbildnern die MHK-Wert-Anteile (Konzentrationen der Komponenten in mg/l bei der minimalen Hemmkonzentration), die Verhältnisse V der Wirkstoffkonzentrationen (V = Konzentration an TITZ / Konzentration an Komplexbildner) und die nach Kull ermittelten Synergismen Syn angegeben sowie (als Vergleich) die MHK-Werte der einzelnen Komponenten.

Tabelle 2

| Nr. | mg/l TITZ | Komplexbildner | mg/l | V | Syn | Bemerkungen |
|---|---|---|---|---|---|---|
| 1 | 14.3 | EDTA | 95 | 0.15 | 0.16 | |
| 2 | 14.3 | EDTA | 190 | 0.08 | 0.18 | |
| 3 | 28.5 | NTA | 190 | 0.15 | 0.31 | |
| 4 | 14.3 | NTA | 190 | 0.08 | 0.18 | |
| 5 | 114 | --- | ---- | | | Vergleich |
| 6 | -- | EDTA | >3200 | | | Vergleich |
| 7 | -- | NTA | >3200 | | | Vergleich |

Beispiel 3

Wirksamkeitssteigerung von BIT gegen Bakterien in Nährlösung

Beispiel 3 wird entsprechend Beispiel 2 durchgeführt, anstelle von TITZ wird aber als Isothiazolinon BIT eingesetzt. Die Ergebnisse sind in Tabelle 3 angegeben.

Tabelle 3

| Nr. | mg/l BIT | Komplexbildner | mg/l | V | Syn | Bemerkungen |
|---|---|---|---|---|---|---|
| 1 | 19 | EDTA | 10 | 1.9 | 0.50 | |
| 2 | 38 | ---- | ---- | | | Vergleich |
| 3 | -- | EDTA | >3200 | | | Vergleich |

Beispiel 4

Wirksamkeitssteigerung im Infektionstest Farbe

In eine Dispersionsfarbe (pH-Wert 8.5; PVK-Wert (Pigment-Volumen-Konzentration) 60) auf Basis einer Styrol-Acrylat-Dispersion des Typs Mowilith® DM 611 (Hoechst AG) werden 0.4 % (bezogen auf die Menge der Dispersionsfarbe) Konservierungsmittel eingearbeitet und homogen verteilt. Folgende Konservierungsmittel- bzw. Vergleichsformulierungen werden untersucht:

Nr. 1: Formulierung mit 1.13 % TITZ und 7.5 % EDTA (als Dinatriumsalz)
Nr. 2: Formulierung mit 1.13 % TITZ
Nr. 3: Formulierung mit 3.4 % TITZ und 7.5 % EDTA (als Dinatriumsalz)
Nr. 4: Formulierung mit 3.4 % TITZ
Nr. 5: Formulierung mit 7.5 % EDTA (als Dinatriumsalz)

Die nach der Einarbeitung in der Farbe vorliegenden Konzentrationen an Isothiazolinon und Komplexbildner sind in Tabelle 4 angegeben. Die Wirksamkeit der Konservierungsmittel wird geprüft, indem man den Farbansätzen Mikroorganismen zusetzt und anschließend nachweist, ob die Mikroorganismen im zu untersuchenden Material wachsen oder durch das Konservierungsmittel abgetötet werden. Dazu werden jeweils 100 g der Probe mit 0.3 ml einer wäßrigen Sporensuspension beimpft, die Bakterien-, Hefe- und Pilzkeime in einer Gesamtkeimzahl von ca. $10^8$ Keime/ml enthält. In der Farbe befinden sich dann ca. $0.3 \times 10^6$ Keime pro Gramm. Als Testorganismen werden Reinkulturen verwandt der Bakterien Enterobacter aerogenes DSM 30053, Escherichia coli DSM 1576, Proteus vulgaris DSM 30118 und Pseudomonas aeruginosa DSM 939, der Pilze Aspergillus niger DSM 1957, Mucor spec. DSM 1222 und Penicillium funicolosum CMI 211742 und der Hefe Candida albicans DSM 1386. Die Proben werden bei 29 - 30 °C gelagert. Eine Woche nach der 1. Infektion der Probe mit der Sporensuspension erfolgt auf die gleiche Art eine 2. Infektion mit 0.3 ml Sporensuspension und nochmals eine Woche später erfolgt auf die gleiche Art eine 3. Infektion.

Die überlebenden Keime werden durch Ausstrich der Farbproben auf Nährböden nachgewiesen. Dazu werden jeweils 1 Woche nach der 1. bzw. der 2. bzw. der 3. Infektion (Lagerung bei 29 - 30 °C) 0.3 g des Probenmaterials entnommen und in Petrischalen auf Nährböden für Bakterien, Pilze und Hefen aufgebracht. Die Petrischalen werden 5 Tage unter optimalen Wuchsbedingungen für Mikroorganismen im Brutschrank gelagert. Vorhandene Mikroorganismen vermehren sich dabei stark und bilden deutlich sichtbare Kolonien. Die Anzahl der Mikroorganismen auf den Nährböden wird nach folgendem Schema halbquantitativ beurteilt:

0 = keine Mikroorganismen nachweisbar
1 = 1 bis 10 Kolonien auf dem Nährboden nachweisbar
2 = 11 bis 70 Kolonien auf dem Nährboden nachweisbar
3 = mehr als 70 Kolonien nachweisbar, Nährboden aber nicht vollständig überwachsen
4 = Nährboden vollständig überwachsen

Die nach der 1., 2. und 3. Infektion gefundenen Anzahlen an Mikroorganismen sind in Tabelle 4 angegeben.

Tabelle 4

| Nr. | TITZ mg/kg | Komplexbildner | mg/kg | 1. | 2. | 3. | Bemerkungen |
|---|---|---|---|---|---|---|---|
| | | | | Infektion | | | |
| 1 | 45 | EDTA | 300 | 0 | 0 | 0 | |
| 2 | 45 | ---- | --- | 0 | 0 | 4 | Vergleich |
| 3 | 135 | EDTA | 300 | 0 | 0 | 0 | |
| 4 | 135 | ---- | --- | 0 | 0 | 1 | Vergleich |
| 5 | --- | EDTA | 300 | 4 | 4 | 4 | Vergleich |

Beispiel 5

Steigerung der Wirkungsgeschwindigkeit

Der Test wird wie im Beispiel 4 beschrieben durchgeführt, die Farbproben werden aber nur einmal beimpft und dann bei 29 - 30 °C im Wärmeschrank gelagert. 1 Tag und 7 Tage nach der Beimpfung werden überlebende Keime wie im Beispiel 4 beschrieben nachgewiesen. Die in der Farbe vorliegenden Konzentrationen an den eingesetzten Isothiazolinonen und Komplexbildnern und die nach 1 Tag bzw. nach 7 Tagen gefundenen Anzahlen an Mikroorganismen sind in Tabelle 5 angegeben (Bewertungsschema:siehe Beispiel 4). Die Werte zeigen, daß die erfindungsgemäß konservierten Farben bereits nach 1 Tag frei von Keimen sind.

Tabelle 5

| Nr. | TITZ mg/kg | Komplexbildner | mg/kg | 1 Tag | 7 Tage | Bemerkungen |
|---|---|---|---|---|---|---|
| 1 | 45 | EDTA | 300 | 0 | 0 | |
| 2 | 45 | HEDP | 300 | 0 | 0 | |
| 3 | 45 | ---- | --- | 2 | 0 | Vergleich |
| 4 | -- | EDTA | 300 | 4 | 4 | Vergleich |
| 5 | -- | HEDP | 300 | 4 | 4 | Vergleich |

**Patentansprüche**

1. Konservierungsmittel, enthaltend ein oder mehrere Isothiazolinone der allgemeinen Formel I

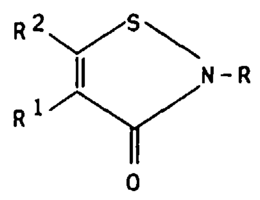

(I)

und/oder Salze davon, wobei

R für Wasserstoff, $(C_1\text{-}C_8)$-Alkyl, $(C_3\text{-}C_{12})$-Cycloalkyl, $(C_2\text{-}C_{18})$-Alkenyl oder $(C_6\text{-}C_{10})$-Aryl steht und
$R^1$ und $R^2$ unabhängig voneinander für Wasserstoff, Fluor, Chlor, Brom, $(C_1\text{-}C_4)$-Alkyl oder $(C_2\text{-}C_4)$-Alkenyl stehen oder $R^1$ und $R^2$ zusammen mit den diese Reste tragenden Kohlenstoffatomen einen carbocyclischen Ring bilden, der bis zu drei Kohlenstoff-Kohlenstoff-Doppelbindungen enthalten kann;
dadurch gekennzeichnet, daß sie ein oder mehrere Komplexbildner und/oder Salze davon enthalten, wobei Konservierungsmittel ausgeschlossen sind, die in wäßriger Lösung als Komplexbildner Diethylentriaminpentaessigsäure in einer Menge von bis zu 0.1 Gewichtsprozent, bezogen auf die gesamte Lösung, und gleichzeitig als zusätzlichen Inhaltsstoff ein Peroxid enthalten.

2. Konservierungsmittel gemäß Anspruch 1, dadurch gekennzeichnet, daß in der allgemeinen Formel I R für Wasserstoff oder $(C_1\text{-}C_8)$-Alkyl steht und $R^1$ und $R^2$ unabhängig voneinander für Wasserstoff oder Chlor stehen oder zusammen eine Tri- oder Tetramethylenkette bilden oder zusammen mit den sie tragenden Kohlenstoffatomen einen anellierten Benzolring bilden.

3. Konservierungsmittel gemäß Anspruch 1 und/oder 2, dadurch gekennzeichnet, daß als Isothiazolinon das 4,5-Dichlor-2-methylisothiazolin-3-on, das 4,5-Dichlor-2-n-octylisothiazolin-3-on, das 5-Chlor-2-methylisothiazolin-3-on, das 2-Methylisothiazolin-3-on, das 2-n-Octylisothiazolin-3-on, das 4,5-Trimethylen-2-methylisothiazolin-3-on, das 1,2-Benzisothiazolin-3-on oder Mischungen aus diesen enthalten sind.

4. Konservierungsmittel gemäß einem oder mehreren der Ansprüche 1 bis 3, dadurch gekennzeichnet, daß als Komplexbildner Substanzen aus der Reihe der Aminopolycarbonsäuren und/oder der Reihe der Polyphosphonsäuren enthalten sind.

5. Konservierungsmittel gemäß einem oder mehreren der Ansprüche 1 bis 4, dadurch gekennzeichnet, daß als Komplexbildner Nitrilotriessigsäure, Ethylendiamintetraessigsäure, Diethylentriaminpentaessigsäure, 1-Hydroxyethan-1,1-diphosphonsäure oder Mischungen aus diesen enthalten sind.

6. Konservierungsmittel gemäß einem oder mehreren der Ansprüche 1 bis 5, dadurch gekennzeichnet, daß die Gesamtkonzentration der enthaltenen Isothiazolinone 0.1 Gewichtsprozent bis 50 Gewichtsprozent und die Gesamtkonzentration der enthaltenen Komplexbildner 0.1 Gewichtsprozent bis 20 Gewichtsprozent, jeweils bezogen auf die Gesamtmenge des Konservierungsmittels, beträgt.

7. Konservierungsmittel gemäß einem oder mehreren der Ansprüche 1 bis 6, dadurch gekennzeichnet, daß es als flüssige Formulierung vorliegt, bevorzugt als Lösung, besonders bevorzugt als wäßrige Lösung.

8. Verfahren zur Herstellung eines Konservierungsmittels gemäß einem oder mehreren der Ansprüche 1 bis 7, dadurch gekennzeichnet, daß die Verbindungen der allgemeinen Formel I, die Komplexbildner und gegebenenfalls weitere Inhaltsstoffe vermischt werden.

9. Verwendung von Konservierungsmitteln gemäß einem oder mehreren der Ansprüche 1 bis 7 zur Bekämpfung von Mikroorganismen in technischen Produkten und Systemen.

10. Verwendung gemäß Anspruch 9 , dadurch gekennzeichnet, daß die Konservierungsmittel in Polymerdispersionen, Dispersionsfarben, Verdickerlösungen, Tensidlösungen, Reinigern, Lasuren, Metallbearbeitungsflüssigkeiten, Kühlflüssigkeiten, Papierbehandlungsmitteln, Kraftstoffen, Wachsemulsionen, Textilhilfsmitteln, Klebstoffen, Pigmentslurries oder Chemietoiletten eingesetzt werden.

11. Verfahren zur Konservierung von technischen Produkten und Systemen, dadurch gekennzeichnet, daß den Produkten und Systemen ein Konservierungsmittel gemäß einem oder mehreren der Ansprüche 1 bis 7 zugesetzt wird.

12. Verfahren zur Steigerung der mikrobioziden Wirkung von Isothiazolinonen gemäß einem oder mehreren der Ansprüche 1 bis 3, dadurch gekennzeichnet, daß die Isothiazolinone in Kombination mit einem oder mehreren Komplexbildnern eingesetzt werden.

Europäisches Patentamt

# EUROPÄISCHER RECHERCHENBERICHT

Nummer der Anmeldung
EP 96 12 0635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br><br><br><br><br><br><br><br><br><br><br>Y | CHEMICAL ABSTRACTS, vol. 93, no. 7, 18.August 1980<br>Columbus, Ohio, US;<br>abstract no. 62380,<br>I.N.IZZAT ET AL.: "Effect of varying concentrations of EDTA on the antimicrobial properties of cutting fluid preservatives"<br>XP002029830<br>* Zusammenfassung *<br><br>& MICROBIOS,<br>Bd. 26, Nr. 103, 1979,<br>Seiten 37-44,<br>--- | 1-12<br><br><br><br><br><br><br><br><br><br><br>1-5 | A01N43/80<br>//(A01N43/80, 61:00,57:20, 37:44) |
| X | CHEMICAL ABSTRACTS, vol. 91, no. 16, 15.Oktober 1979<br>Columbus, Ohio, US;<br>abstract no. 127567,<br>I.N.IZZAT ET AL.: "The potentiation of the antimicrobial activitiesw of cutting fluid preservatives by EDTA"<br>XP002029831<br>* Zusammenfassung *<br>& LUBR.ENG.,<br>Bd. 35, Nr. 3, 1979,<br>Seiten 153-159,<br>---<br>-/-- | 1-12 | RECHERCHIERTE SACHGEBIETE (Int.Cl.6)<br>A01N |

Der vorliegende Recherchenbericht wurde für alle Patentansprüche erstellt

| Recherchenort | Abschlußdatum der Recherche | Prüfer |
|---|---|---|
| DEN HAAG | 21.April 1997 | Lamers, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 96 12 0635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 91, no. 9, 27.August 1979 Columbus, Ohio, US; abstract no. 69989, I.N.IZZAT ET AL.: "The potentiation of cutting fluid preservatives by diethylene triamine pentaacetic acid" XP002029832 * Zusammenfassung * & INT.BIODETERIOR.BULL., Bd. 15, Nr. 1, 1979, Seiten 1-6, --- | 1-12 | |
| X | EP 0 392 250 A (RIEDEL DE HAEN AG) 17.Oktober 1990 * Seite 9; Beispiel 12 * --- | 1-4,6-12 | |
| X | CHEMICAL ABSTRACTS, vol. 97, no. 24, 13.Dezember 1982 Columbus, Ohio, US; abstract no. 200410, E.O.BENNETT ET AL.: "Effects of EDTA on the antimicrobial properties of mixtures of cutting fluid preservatives. Part II" XP002029833 * Zusammenfassung * & TRIBOL.INT., Bd. 15, Nr. 4, 1982, Seiten 187-189, --- | 1-12 | RECHERCHIERTE SACHGEBIETE (Int.Cl.6) |
| X | EP 0 593 250 A (CALGON CORP) 20.April 1994 * Seite 3, Zeile 50 - Zeile 12 * * Seite 4, Zeile 19 - Zeile 20 * | 1-4,6-12 | |
| Y | | 1-5 | |
| X | EP 0 542 489 A (ROHM & HAAS) 19.Mai 1993 * Seite 2, Zeile 10 - Zeile 31 * * Seite 3, Zeile 36 * --- -/-- | 1-4,6-12 | |

Der vorliegende Recherchenbericht wurde für alle Patentansprüche erstellt

| Recherchenort | Abschlußdatum der Recherche | Prüfer |
|---|---|---|
| DEN HAAG | 21.April 1997 | Lamers, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 96 12 0635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 683 978 A (RHONE POULENC CHEMICALS) 29.November 1995<br>* Seite 2, Zeile 2 - Zeile 21 *<br>--- | 1-5 | |
| Y | WO 95 15683 A (ZENECA INC) 15.Juni 1995<br>* Seite 3, Zeile 26 - Seite 4, Zeile 3 *<br>--- | 1-5 | |
| X | GB 2 200 846 A (DEARBORN CHEMICALS CO) 17.August 1988<br>* Seite 20, Zeile 19 - Zeile 20 *<br>--- | 1-11 | |
| X | CHEMICAL ABSTRACTS, vol. 115, no. 21, 25.November 1991<br>Columbus, Ohio, US;<br>abstract no. 226151,<br>XP002029834<br>* Zusammenfassung *<br>& JP 03 047 105 A (JAPAN SYNTHETIC RUBBER) 28.Februar 1991<br>--- | 1-11 | |
| X | EP 0 541 318 A (DIVERSEY CORP) 12.Mai 1993<br>* Seite 2; Tabelle 1 *<br>----- | 1-11 | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 21.April 1997 | Lamers, W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)